# EUROPÄISCHE PATENTSCHRIFT

(11) **EP 4 479 216 B1**
(45) Veröffentlichungstag und Bekanntmachung des Hinweises auf die Patenterteilung: **14.10.2026**
(21) Anmeldenummer: 24701826.0
(22) Anmeldetag: 19.01.2024
(51) Int. Cl.: B23K 26/06, B23K 26/144, B23K 26/14, B23K 26/342

(54) **VERWENDUNG EINER STRAHLDÜSE MIT EINER GESTRECKTEN QUERSCHNITTSFLÄCHE EINES LICHTKANALS**
USE OF A JET NOZZLE HAVING A LIGHT CHANNEL WITH AN OBLONG CROSS-SECTIONAL AREA
UTILISATION D'UNE BUSE À JET COMPORTANT UN CONDUIT DE LUMIÈRE PRÉSENTANT UNE SURFACE DE SECTION TRANSVERSALE OBLONGUE

(30) Priorität: 27.01.2023 DE 102023102043; 04.09.2023 DE 102023123702
(43) Veröffentlichungstag der Anmeldung: 25.12.2024
(73) Patentinhaber: TRUMPF Laser- und Systemtechnik SE, 71254 Ditzingen (DE)
(72) Erfinder: SPEKER, Nicolai, 74385 Pleidelsheim (DE); SAUTTER, Björn, 71229 Leonberg (DE); SCHOLZ, Andreas, 65232 Taunusstein (DE); BELITZ, Stefan, 70176 Stuttgart (DE); STECK, Arne, 71686 Remseck am Neckar (DE); SPIECKER, Jakob, 70178 Stuttgart (DE); GOETZELMANN, Fabian, 71229 Leonberg (DE); HESSE, Tim, 71254 Ditzingen (DE); BRAUN, Holger, 71272 Renningen (DE)
(74) Vertreter: Trumpf Patentabteilung
(86) Internationale Anmeldenummer: PCT/EP2024/051299
(87) Internationale Veröffentlichungsnummer: WO 2024/156618

(56) Entgegenhaltungen:
- EP-B1- 3 315 243
- WO-A1-2015/141035
- WO-A1-2016/026706
- WO-A1-2017/025148
- DE-B4- 102007 043 146
- US-A1- 2021 213 565

## Beschreibung

### Technisches Gebiet

Die vorliegende Erfindung betrifft eine Verwendung einer Strahldüse zum Laserauftragschweißen entlang einer Vorschubrichtung.

### Stand der Technik

Laserauftragschweißen findet etwa in der Reparatur-, Beschichtungs- und/oder Verbindungstechnik Anwendung. Es kann zwischen dem konventionellen Laserauftragschweißen (Laser Metal Deposition (LMD), Direct Metal Deposition (DMD) oder Direct Energy Deposition (DED)) und dem sogenannten High-Speed Laserauftragschweißen (HS-LMD oder extremes Hochgeschwindigkeits-Laserauftragschweißen (EHLA)) unterschieden werden. HS-LMD-Verfahren sind beispielsweise in den Offenlegungsschriften DE 10 2011 100 456 A und DE 10 2018 130 798 A1 beschrieben. Ein weiteres Verfahren zum Laserauftragschweißen ist aus der chinesischen Patentanmeldung CN 109175372 A bekannt.

Mittels Laserauftragschweißen kann eine Funktionsschicht auf ein Werkstück aufgetragen werden. Diese erhöht gegenüber einem unbearbeiteten Werkstück im Allgemeinen die Belastbarkeit des mittels Laserauftragschweißen bearbeiteten Werkstücks. Die Funktionsschicht kann beispielsweise als Verschleißschutzschicht dienen. Der Auftrag der Funktionsschicht basiert auf einem Aufschmelzen einer Werkstückoberfläche, einem Auftragen eines pulverförmigen Zusatzwerkstoffs und einem anschließenden Abkühlen, sodass eine Matrixstruktur mit Hartstoffpartikeln stoffschlüssig mit der Werkstoffoberfläche verbunden ist. Somit greift das Laserauftragschweißen in die innere Materialstruktur des Werkstücks ein und verändert diese. Dies kann unter Umständen Unzulänglichkeiten in der inneren Materialstruktur nach sich ziehen. Diese können die angestrebte Erhöhung der Belastbarkeit beeinträchtigen. Die Unzulänglichkeiten können mikroskopischer Natur sein, weshalb sie nur unter hohem Aufwand identifizierbar sind.

DE 10 2007 043 146 B4 offenbart einen Bearbeitungskopf mit integrierter Pulverzuführung zum Auftragsschweißen mit Laserstrahlung, die mit einem Brennfleck, der eine rechteckige, quadratische oder elliptische Form aufweist, auf zugeführtes Pulver und eine Werkstückoberfläche gerichtet ist, wobei der Bearbeitungskopf während des Auftragsschweißens entlang einer Vorschubachsrichtung bewegt wird, wobei die Pulverzuführung durch Kanäle gebildet ist, die in zwei sich senkrecht der Vorschubachsrichtung erstreckenden Reihen gegenüberliegend angeordnet sind, wobei die Kanäle innerhalb der beiden Reihen äquidistant und parallel zueinander angeordnet sind, und die jeweils in Reihe angeordneten Kanäle unter einem Neigungswinkel ausgerichtet sind, so dass aus den Kanälen austretendes Pulver in den Brennfleck der Laserstrahlung von zwei sich gegenüberliegenden Seiten über die gesamte Länge des Brennflecks zugeführt wird, wobei die Länge des Brennflecks senkrecht zur Vorschubachsrichtung ausgerichtet ist, und dieses Pulver beim Auftreffen auf die Werkstückoberfläche eine geradlinige Pulverfront bildet.

WO 2017/025148 A1 offenbart ein Verfahren und eine Vorrichtung zum Laserauftragsschweißen, wobei ein Zusatzwerkstoff, insbesondere ein pulverförmiger Zusatzwerkstoff, auf wenigstens einen Bereich einer Oberfläche eines Werkstücks aufgebracht wird. Der Zusatzwerkstoff wird wenigstens teilweise mittels eines Laserstrahls aufgeschmolzen und/oder ein Bereich der Werkstückoberfläche mittels eines Laserstrahls aufgeschmolzen derart, dass sich nach dem Erstarren ein stoffschlüssiger Materialauftrag des Zusatzwerkstoffs auf der Werkstückoberfläche ergibt. Der Laserstrahl wird auf die Werkstückoberfläche mittels einer Laserbearbeitungseinrichtung gerichtet. Die Laserbearbeitungseinrichtung weist eine Laserdüse auf, die einen Arbeitsbereich definiert, innerhalb dessen der Laserstrahl auf die Werkstückoberfläche auftrifft. Die Auftreffstelle des Laserstrahls auf der Werkstückoberfläche wird durch eine Abtastbewegung verändert, bei welcher sich die Laserdüse und die Werkstückoberfläche relativ zueinander bewegen. Der Abtastbewegung wird eine Zusatzbewegung überlagert, durch welche die Auftreffstelle des Laserstrahls auf der Werkstückoberfläche innerhalb des Arbeitsbereiches der Laserdüse verändert wird.

WO 2016/026706 A1 offenbart ein Verfahren umfassend die Schritte: a) Bereitstellen von Baumaterial; und b) Schmelzen des Baumaterials unter Verwendung eines Lichtstrahls; wobei die Schritte a) und b) so ausgeführt werden, dass das Objekt nach und nach aus dem geschmolzenen Baumaterial hergestellt wird. In Schritt b) wird der Strahl auf das Baumaterial projiziert, um einen primären Fleck auf dem Baumaterial zu erzeugen, wobei der Strahl wiederholt in zwei Dimensionen in Übereinstimmung mit einem ersten Abtastmuster abgetastet wird, um einen effektiven Fleck auf dem Baumaterial zu erzeugen, wobei der effektive Fleck eine zweidimensionale Energieverteilung aufweist. Der effektive Fleck wird in Bezug auf das herzustellende Objekt verschoben, um das Objekt durch Schmelzen des Baumaterials schrittweise herzustellen.

WO 2015/141035 A1 offenbart eine Düse einer Laminierungsformvorrichtung, welche mit einem Gaszufuhrabschnitt und einem Gasauslassabschnitt versehen ist. Der Gaszuführabschnitt ist mit einer Gaszufuhröffnung versehen, durch die ein Gas zugeführt wird. Der Gasauslassabschnitt ist mit einer Gasauslassöffnung versehen, durch die ein Gas ausgelassen wird. Die Gaszuführungsöffnung und die Gasauslassöffnung sind einander zugewandt, indem sie voneinander beabstandet sind.

### Darstellung der Erfindung

Ausgehend von dem bekannten Stand der Technik ist es eine Aufgabe der vorliegenden Erfindung, eine verbesserte Verwendung einer Strahldüse zum Laserauftragschweißen entlang einer Vorschubrichtung bereitzustellen. Die Erfindung zielt insbesondere darauf ab, eine Schweißqualität einer aufgetragenen Funktionsschicht und des Werkstücks insgesamt zu erhöhen und Unzulänglichkeiten in einer Schweißverbindung zwischen einem pulverförmigen Zusatzwerkstoff und einer Werkstoffoberfläche, zu verringern oder zu vermeiden. Bei den Unzulänglichkeiten kann es sich um Bindefehler zwischen der Werkstoffoberfläche und der aufgetragenen Funktionsschicht oder zwischen einzelnen aufgetragenen Funktionsschichten handeln. Es kann sich bei den Unzulänglichkeiten auch um Poren, also Lufteinschlüsse, handeln, die innerhalb der aufgetragenen Funktionsschicht oder zwischen der aufgetragenen Funktionsschicht und der Werkstoffoberfläche auftreten. Insbesondere wenn es sich bei der Werkstoffoberfläche um einen Gusswerkstoff handelt, können Poren vermehrt auftreten. Bei den Unzulänglichkeiten kann es sich auch um Risse handeln, die insbesondere vertikal zur Werkstoffoberfläche innerhalb der aufgetragenen Funktionsschicht verlaufen. Die Unzulänglichkeiten können auch daraus bestehen, dass sich Pulverpartikel, insbesondere Karbide, des pulverförmigen Zusatzwerkstoffs in einem Matrixmaterial des pulverförmigen Zusatzwerkstoffs lösen, was zu einer Versprödung des Matrixmaterials führt. Die Erfindung zielt weiter insbesondere darauf ab, eine zuverlässige Verwendung einer

Strahldüse bereitzustellen, die gegenüber thermischen Belastungen widerstandsfähig ist. Die Erfindung kann weiter darauf abzielen, die Verwendung einer Strahldüse derart auszugestalten, sodass sie über sehr hohe Zyklenanzahlen hinweg ein zuverlässiges und präzises Laserauftragschweißen gewährleistet.

Die Aufgabe wird durch ein Verfahren zur Verwendung einer Strahldüse mit den Merkmalen des Anspruchs 1 gelöst. Vorteilhafte Weiterbildungen ergeben sich aus den Unteransprüchen, der Beschreibung und den Figuren.

Entsprechend wird ein Verfahren zur Verwendung einer Strahldüse zum Laserauftragschweißen entlang einer Vorschubrichtung vorgeschlagen, die einen Lichtkanal zur Führung zumindest eines Laserstrahls, der auf ein Werkstück gerichtet ist, aufweist. Beim Laserauftragschweißen kann es sich um ein Verfahren zum High-Speed Laserauftragschweißen (HS-LMD) handeln. Die Vorschubrichtung ist die Richtung, entlang der sich die Strahldüse relativ zu dem Werkstück bewegt. Sie kann aus einer Bewegung, insbesondere einer Rotationsbewegung, des Werkstücks, aus einer Bewegung der Strahldüse oder aus einer Überlagerung beider Bewegungen resultieren. Die Vorschubrichtung und die korrelierende Vorschubbewegung können über den Prozessverlauf konstant sein. Alternativ können sie mit dem jeweiligen Prozessstadium variieren. Bei dem Werkstück kann es sich um ein rotationssymmetrisches Werkstück, wie eine Bremsscheibe, einen Hydraulikzylinder, eine Druckwalze oder ein Gleitlager handeln. Der Laserstrahl kann durch den Lichtkanal hindurch strahlen. Er kann von einer Laserquelle bereitgestellt werden, von der der Laserstrahl mittels eines Lichtleitkabels zu einem Lasersystem geführt wird, das den Laserstrahl über eine Kollimationslinse aufteilt und ihn vor dessen Eintritt in die Strahldüse über eine Laseroptik prozessgerecht fokussiert. Der Lichtkanal kann ein hohler Kanal sein, der die gesamte Strahldüse entlang einer Längsrichtung durchläuft. Durch den Lichtkanal kann außer dem Laserstrahl auch ein Prozessgas zur Werkstückoberfläche geleitet werden.

Die Strahldüse hat ferner eine radial außerhalb des Lichtkanals angeordnete Pulvereinheit zur Führung zumindest eines Pulverstrahls, der auf das Werkstück aufzutragen ist. Die Pulvereinheit kann ausgehend von der Längsrichtung der Strahldüse radial außerhalb des Lichtkanals sein und kann Bestandteil einer Außenstruktur sein, die den Lichtkanal geschlossen umgibt. Der Pulverstrahl kann einen pulverförmigen Zusatzwerkstoff führen, der aus Hartstoffpartikeln, insbesondere Karbiden, und einem Matrixwerkstoff besteht. Die Pulvereinheit kann der Teil der Strahldüse sein, der dazu vorgesehen ist, den pulverförmigen Zusatzwerkstoff direkt oder indirekt zu führen. Die Pulvereinheit kann Injektorführungen aufweisen, in die Pulverinjektoren einsetzbar sind. Sie kann auch einen Ringspalt aufweisen, innerhalb dessen der pulverförmige Zusatzwerkstoff geführt wird.

Eine orthogonal zu einer Längsrichtung der Strahldüse verlaufende Querschnittsfläche des Lichtkanals ist von einer Kreisform abweichend in der Vorschubrichtung gestreckt. Die Streckung kann in die Vorschubrichtung oder entgegengesetzt zur Vorschubrichtung zeigen. Durch die Streckung kann in der Vorschubrichtung mehr als eine Prozesszone auf dem Werkstück vorgesehen sein. Die Strahldüse ist ein im erweiterten längliches Bauteil. Die Längsrichtung kann die Richtung sein, in der die Strahldüse ausgerichtet ist. Orthogonal zu der Längsrichtung hat die Strahldüse einen Querschnitt, von dem ein Teil die Form des Lichtkanals ist. Diese ist vorliegend in der Vorschubrichtung gestreckt und kann entlang der Vorschubrichtung achsensymmetrisch sein und um einen Mittelpunkt des Querschnitts des Lichtkanals punktsymmetrisch sein. Eine minimale Querschnittsfläche des Lichtkanals ist von einer Dimension, insbesondere einem Durchmesser, des Laserstrahls vorgegeben. Gegenüber der minimalen Dimension ist die Querschnittsfläche entlang der Vorschubrichtung gestreckt.

Die Strahldüse kann so eine erhöhte Variabilität (i) der Laserstrahlführung, (ii) der Anwendung eines pulverförmigen Zusatzwerkstoffs, (iii) des Wärmemanagements und/oder (iv) des Schutzes des Lasersystems inklusive der Strahldüse bewirken. Sie ermöglicht das Vorsehen mehrerer unabhängiger Prozesszonen bei hoher Präzision. Die Prozesszonen können sich in Zonen für das Laserauftragschweißen und Zonen für die Vor- und/oder Nachbearbeitung aufteilen. In den Zonen für das Laserauftragschweißen findet eine Wechselwirkung zwischen zumindest einem Laserstrahl und einem pulverförmigen Zusatzmaterial statt. Die Vor- und/oder Nachbearbeitung kann das Reinigen der Werkstoffoberfläche, die Vorwärmung der Werkstoffoberfläche, bevor der pulverförmige Zusatzwerkstoff aufgetragen wird, die Nachwärmung der Werkstoffoberfläche, nachdem der pulverförmige Zusatzwerkstoff aufgetragen worden ist, oder eine Kombination davon sein. Bei der Vorund/oder Nachbearbeitung kann der Laserstrahl ohne Wechselwirkung mit dem pulverförmigen Zusatzmaterial auf das Werkstück treffen. Die unabhängigen Prozesszonen können die Schweißqualität und somit die die Belastbarkeit der aufgetragenen Funktionsschicht, insbesondere der Verschleißschutzschicht, und des Werkstücks insgesamt erhöhen. Ein zusätzliches Prozessgas kann die Prozesszonen stabilisieren und die Präzision des Laserauftragschweißens sowie die Lebensdauer der Strahldüse erhöhen.

Insbesondere kann die Strahldüse das Auftreten von Bindefehlern verringern. Denn Bindefehler können dann auftreten, wenn die von dem Laserstrahl erhitzte Oberfläche, etwa das Werkstück oder eine zuvor aufgeschweißte Funktionsschicht, nicht ausreichend erwärmt wurde. Diese mangelnde Erwärmung kann die Folge davon sein, dass eine Laserleistung eines einzelnen Laserstrahls geringgehalten wird, um eine Überhitzung des pulverförmigen Zusatzwerkstoffs zu vermeiden. Durch die erhöhte Variabilität der Laserstrahlführung, die erhöhte Variabilität der Anwendung eines pulverförmigen Zusatzwerkstoffs und/oder die erhöhte Variabilität des Wärmemanagements der Strahldüse kann das Auftreten von Bindefehlern verringert oder gar vermieden werden, insbesondere indem die Strahldüse durch die gestreckte Form einen Primärstrahl und einen Sekundärstrahl führt, die mehrere Prozesszonen bewirken.

Weiter insbesondere kann die Strahldüse das Auftreten von Poren zwischen der aufgeschweißten Funktionsschicht und der von dem Laserstrahl erhitzten Oberfläche verringern. Denn Poren können dann auftreten, wenn in dem Werkstück befindliche Lamellen, insbesondere Graphitlamellen, durch die Laserstrahlung verdampfen. Poren können ferner auftreten, wenn die zu bearbeitende Oberfläche Verunreinigungen aufweist, beispielsweise verursacht von Ölen, Fetten, Kühlschmierstoffen oder Oxide, die durch den Schweißprozess nicht vollständig abgeführt werden können. Die unerwünschte Verdampfung der Verunreinigungen kann die Folge davon sein, dass eine Laserleistung eines einzelnen Laserstrahls derart hoch eingestellt ist, dass Bindefehler aufgrund mangelnder Erwärmung vermieden werden können. Durch die erhöhte Variabilität der Laserstrahlführung, die erhöhte Variabilität der Anwendung eines pulverförmigen Zusatzwerkstoffs und/oder die erhöhte Variabilität des Wärmemanagements der Strahldüse kann das Auftreten von Poren verringert oder gar vermieden werden, insbesondere indem die Strahldüse durch die gestreckte Form einen Primärstrahl und einen Sekundärstrahl führt, die mehrere Prozesszonen bewirken.

Weiter insbesondere kann die Strahldüse das Auftreten von Rissen in der aufgeschweißten Funktionsschicht verringern. Denn Risse können dann auftreten, wenn ein Temperaturgradient zwischen dem stark erhitzten pulverförmigen Zusatzwerkstoff und der weniger stark erhitzten Werkstückoberfläche so stark ist, dass eine bei der Abkühlung auftretende Materialschrumpfung rissbegründende Spannungen nach sich zieht. Die Rissbildung kann die Folge davon sein, dass eine Laserleistung eines einzelnen Laserstrahls derart hoch eingestellt ist, dass Bindefehler aufgrund mangelnder Erwärmung vermieden werden können. Durch die erhöhte Variabilität der Laserstrahlführung, die erhöhte Variabilität der Anwendung eines pulverförmigen Zusatzwerkstoffs und/oder die erhöhte Variabilität des Wärmemanagements der Strahldüse kann das Auftreten von Rissen verringert oder gar vermieden werden, insbesondere indem die Strahldüse durch die gestreckte Form einen Primärstrahl und einen Sekundärstrahl führt, die mehrere Prozesszonen bewirken.

Weiter insbesondere kann die Strahldüse eine Auflösung von Hartstoffpartikeln, insbesondere Karbiden, in dem Matrixmaterial verringern. Das pulverförmige Zusatzmaterial kann Hartstoffpartikel, insbesondere Karbide, und ein Matrixmaterial aufweisen. In der aufgeschweißten Funktionsschicht sollen die Hartstoffpartikel ungelöst vorhanden sein, um die Belastbarkeit der Funktionsschicht zu erhöhen. Hartstoffpartikel können sich jedoch auflösen, wenn der pulverförmige Zusatzwerkstoff mit einer zu hohen Bestrahlungsstärke beaufschlagt wird und die Hartstoffpartikel somit aufschmelzen. Aufgelöste Hartstoffpartikel bewirken eine Versprödung der aufgeschweißten Funktionsschicht, weil das Matrixmaterial weniger duktil ist, wodurch beispielsweise durch Schrumpfungen auftretende Spannungen bei der Abkühlung oder der Belastung des Werkstücks nicht von dem Matrixmaterial aufgenommen werden können. Durch die erhöhte Variabilität der Laserstrahlführung, die erhöhte Variabilität der Anwendung eines pulverförmigen Zusatzwerkstoffs und/oder die erhöhte Variabilität des Wärmemanagements der Strahldüse kann die Auflösung von Hartstoffpartikeln verringert oder gar vermieden werden, insbesondere indem die Strahldüse durch die gestreckte Form einen Primärstrahl und einen Sekundärstrahl führt, die mehrere Prozesszonen bewirken.

Weiter insbesondere kann die Strahldüse ein Anhaften von Pulverpartikeln am Düsenmund verhindern. Aufgrund der hohen Prozesswärme kann es aufgrund der reflektierenden Laserstrahlung und/oder aufgrund einer Metalldampffackel grundsätzlich zu einem Anhaften oder gar einem Verschweißen von Zusatzwerkstoff am Düsenmund kommen, was zu einer Störung der Gas- und Pulverströme führen kann, die in der Folge das Prozessergebnis beeinträchtigt. Die Metalldampffackel ist ein Ergebnis der teilweisen Verdampfung des Werkstoffs aufgrund des Laserauftragschweißens. Sie kann zu einer Streuung und/oder einer Absorption von Laserstrahlung führen und in der Folge die Vorwärmung des Werkstücks beeinträchtigen. Dies kann die Ausbildung von Bindefehlern weiter begünstigen. Durch die erhöhte Variabilität der Laserstrahlführung, die erhöhte Variabilität der Anwendung eines pulverförmigen Zusatzwerkstoffs und/oder die erhöhte Variabilität des Wärmemanagements der Strahldüse kann die unerwünschte Auflösung von Hartstoffpartikeln sowie eine Ausbreitung der Metalldampffackel verringert oder gar vermieden werden, insbesondere indem die Strahldüse durch die gestreckte Form einen Primärstrahl und einen Sekundärstrahl führt, die mehrere Prozesszonen bewirken.

Entlang der gestreckten Querschnittsfläche des Lichtkanals kann zumindest ein Laserstrahl, insbesondere zumindest ein kreisförmiger Laserstrahl und/oder ein ovaler Laserstrahl, derart geführt werden, dass sich mehr als eine Prozesszone ausbildet, was das Schweißverhalten begünstigt und die Unzulänglichkeiten der Schweißverbindung, insbesondere das Auftreten von Bindefehlern, Poren, Rissen und oder der Auflösung von Karbiden in dem Matrixmaterial, verringert und die Belastbarkeit der aufgetragenen Funktionsschicht erhöht. Somit können das Aufschmelzverhalten, das Pulverstrahlverhalten, die stoffschlüssige Verbindung und das Abkühlverhalten variabel an die jeweilige Anwendung und die jeweils vorherrschenden Werkstoffeigenschaften und Prozessparameter angepasst werden. Insbesondere kann vermieden werden, dass die dem Werkstück im Bereich des Schmelzbads und die dem pulverförmigen Zusatzwerkstoff zugeführte Laserleistung zu hoch oder zu gering ist, um das gewünschte Prozessergebnis zu erreichen. Beispielsweise kann neben einem Primärlaserstrahl zum Laserauftragschweißen in unmittelbarer Nähe zu einem ersten Prozessort ein Sekundärlaserstrahl zur Vor- oder Nachbearbeitung innerhalb des Lichtkanals geführt werden. Der Sekundärlaserstrahl kann in der Vorschubrichtung vor oder nach dem Primärlaserstrahl geführt werden, abhängig davon, ob er zur Vor- oder Nachbearbeitung dient. Eine geometrisch dichte Anordnung des Sekundärlaserstrahls zum Primärlaserstrahl verringert thermische Verluste aufgrund einer Wärmeleitung innerhalb des Werkstücks, was die stoffschlüssige Verbindung zwischen dem pulverförmigen Zusatzwerkstoff und dem Werkstoff begünstigt. Durch gestreckte Form ist ein Schweißverhalten ohne die vorgenannten Unzulänglichkeiten ermöglicht.

In einer Ausführungsform ist die Querschnittsfläche an einem von einem Düsenmund gebildeten distalen Bereich der Strahldüse nach Art eines Langlochs ausgestaltet, bei dem sich an zwei gegenüberliegenden Enden eines rechteckigen Abschnitts jeweils ein Teilkreisabschnitt anschließt.

Die Pulvereinheit kann Teil des Düsenmunds sein. Der Düsenmund ist der dem Werkstück zugewandte Teil der Strahldüse. Der Endabschnitt des Düsenmunds hat einen distalen Bereich. Dieser stellt den Teil des Düsenmunds dar, der am nächsten zum Werkstück ist. An dem von dem Werkstück abgewandten Abschnitt hat die Strahldüse einen proximalen Bereich und einen Flanschabschnitt. Der proximale Bereich und der Flanschabschnitt sind der dem Werkstück abgewandte Teil der Strahldüse. Über den Flanschabschnitt kann die Düse mit einem weiteren Bestandteil des Lasersystems, wie beispielsweise einer Laseroptik oder einer Prozesseinheit, koppelbar sein.

In einer Ausführungsform ist die die Querschnittsfläche, insbesondere im Bereich des Düsenmunds, derart gestreckt ist, dass sie in der Vorschubrichtung zumindest 1,5-fach, insbesondere zumindest doppelt so groß ist wie quer zur Vorschubrichtung. Insbesondere kann der Abstand der beiden Teilkreise mehr als doppelt so groß sein wie der Abstand der beiden parallelen Flanken des Langlochs. Dies schafft die Voraussetzung dafür, dass in dem Lichtkanal mehr als ein Laserstrahl geführt werden kann um entsprechende Prozesszonen bereitzustellen. Die Querschnittsfläche kann vom Düsenmund ausgehend in Richtung des proximalen Abschnitts noch weiter zunehmen. So kann die Querschnittsfläche im Bereich des distalen Abschnitts ihre geringste Dimension erreichen. Auch diese geringste Dimension kann dergestalt sein, dass sie für die Führung mehrerer Laserstrahlen ausreichend ist.

In einer Ausführungsform ist ein Flächenmittelpunkt der Querschnittsfläche exzentrisch zu dem zumindest einen Laserstrahlmittelpunkt des zumindest einen Laserstrahls. Somit kann der Laserstrahl außerhalb eines Mittelpunkt geführt werden, um eine Aufteilung der Strahldüse und der von ihr hervorgerufenen Laserstrahlausrichtungen in mehrere Prozesszonen zu gewährleisten.

In einer Ausführungsform ist der Lichtkanal dazu angepasst, eine Mehrzahl an Laserstrahlen zu führen, wobei die Mehrzahl einen ersten Laserstrahl als Primärstrahl und einen zweiten Laserstrahl als Sekundärstrahl hat. Der Primärstrahl und der Sekundärstrahl können auf dasselbe Lichtleitkabel zurückgehen. Ein bereitgestelltes Laserlicht kann über eine Kollimationslinse in ein parallel gerichtetes Strahlbündel aufgeteilt werden. Das Strahlbündel kann beispielsweise durch eine Keilplatte aus einem einzelnen Laserstrahl den Primärstrahl und den Sekundärstrahl formen. In diesem Fall können der Primärstrahl und der Sekundärstrahl dieselbe Wellenlänge haben und dieselbe Energie transportieren. Alternativ können sich der Primärstrahl und der Sekundärstrahl hinsichtlich ihrer Wellenlänge und ihrer Energie unterscheiden. Die jeweiligen Mittelpunkte des Primärstrahls und des Sekundärstrahls können in der Vorschubrichtung in einer Linie versetzt zu einem Mittelpunkt des Lichtkanals liegen. Das Vorsehen der Mehrzahl an Laserstrahlen begünstigt die zuverlässige Umsetzung mehrerer Prozesszonen.

In einer Ausführungsform ist der Sekundärstrahl dazu angepasst, weniger mit dem Pulverstrahl zu interagieren als der Primärstrahl, wobei der Sekundärstrahl in der Vorschubrichtung vor dem Primärstrahl ist, um das Werkstück vorzuwärmen. Die Interaktion des Primärstrahls und des Sekundärstrahls mit dem Pulverstrahl kann über eine entsprechende Führung des jeweiligen Laserstrahls und/oder über eine entsprechende Führung des Pulverstrahls realisiert werden. Beispielsweise kann die Pulvereinheit an einem Düsenmund in einer Umfangsrichtung um den Lichtkanal einen Pulverabschnitt bilden, an den sich in der Umfangsrichtung ein pulvereinheitfreier Vorschubabschnitt anschließt. Der Vorschubabschnitt umgibt den Teil des Lichtkanals, der zur Vorschubrichtung hin gewandt ist. Somit kann der Vorschubabschnitt bedingen, dass der Pulverstrahl nicht mit dem Sekundärstrahl interagiert, sodass der Sekundärstrahl zur Vorwärmung des Werkstücks und nicht der Pulverpartikel herangezogen werden kann.

In einer Ausführungsform ist der Sekundärstrahl dazu angepasst, weniger mit dem Pulverstrahl zu interagieren als der Primärstrahl, wobei der Sekundärstrahl in der Vorschubrichtung hinter dem Primärstrahl ist, um das Werkstück nachzuwärmen. Die Interaktion des Primärstrahls und des Sekundärstrahls mit dem Pulverstrahl kann über eine entsprechende Führung des jeweiligen Laserstrahls und/oder über eine entsprechende Führung des Pulverstrahls realisiert werden. So kann ein pulvereinheitfreier Vorschubabschnitt den Teil des Lichtkanals umgeben, der von der Vorschubrichtung abgewandt ist. Somit kann der Vorschubabschnitt bedingen, dass der Pulverstrahl nicht mit dem Sekundärstrahl integriert sodass der Sekundärstrahl zur Nachwärmung oder zur Reinigung des Werkstücks herangezogen werden kann.

In einer Ausführungsform hat die Mehrzahl an Laserstrahlen einen dritten Laserstrahl als Tertiärstrahl, der dazu angepasst ist, weniger mit dem Pulverstrahl zu interagieren als der Primärstrahl, wobei der Primärstrahl in der Vorschubrichtung vor dem Tertiärstrahl ist. Die jeweiligen Querschnitte von dem Primärstrahl, dem Sekundärstrahl und dem Tertiärstrahl können entlang einer Linie verlaufen, ihre jeweiligen Mittelpunkte also entlang einer Linie haben. Diese Linie kann an der Vorschubrichtung ausgerichtet sein. Sie kann auch mit ihr deckungsgleich sein. Über den Primärstrahl, den Sekundärstrahl und den Tertiärstrahl lassen sich zumindest drei verschiedene Prozesszonen realisieren, die das Schweißverhalten begünstigt.

In einer Ausführungsform ist bei der Mehrzahl an Laserstrahlen der Laserstrahl, der in der Vorschubrichtung vorne ist, beispielsweise der Sekundärstrahl, im Querschnitt konzentrisch zu einem vorderen Teilkreisabschnitt der Querschnittsfläche und/oder der Laserstrahl, der in der Vorschubrichtung hinten ist, beispielsweise der Tertiärstrahl, im Querschnitt konzentrisch zu einem hinteren Teilkreisabschnitt der Querschnittsfläche. Dies ermöglicht eine effiziente Raumausnutzung der Querschnittsfläche des Lichtkanals bei Führung mehrerer Laserstrahlen.

In einer Ausführungsform ist bei der Mehrzahl an Laserstrahlen ein Flächenmittelpunkt der Querschnittsfläche deckungsgleich zu einem Flächenmittelpunkt der Mehrzahl an Laserstrahlen. Der Flächenmittelpunkt der Querschnittsfläche kann der Punkt sein, zudem der Querschnitt punktsymmetrisch ist. Der Flächenmittelpunkt der Mehrzahl an Laserstrahlen kann der Punkt sein, an dem die jeweiligen Laserstrahlen im Querschnitt ihren Flächenmittelpunkt haben. In dem diese zueinander deckungsgleich sind, ist die Raumausnutzung der Querschnittsfläche des Lichtkanals bei Führung mehrerer Laserstrahlen weiter optimiert.

In einer Ausführungsform weist die Strahldüse genau einen Lichtkanal auf, sodass die Mehrzahl an Laserstrahlen innerhalb der Strahldüse zueinander abschirmungsfrei geführt ist. Der eine Lichtkanal führt somit die Mehrzahl an Laserstrahlen, ohne dass um den jeweiligen Laserstrahl eine separate Abschirmung vorgesehen ist. Dies vereinfacht den Aufbau der Düse und erleichtert einen Wärmeabtransport.

In einer Ausführungsform ist die Strahldüse mittels eines additiven Fertigungsverfahrens, insbesondere mittels Pulverbett-Schmelzen, hergestellt. Hierfür kann die Strahldüse aus Kupfer oder einer Kupferlegierung, insbesondere einer Kupfer-Chrom-Zirkonium-Legierung, bestehen. Diese eignet sich für die additive Fertigungsverfahren einerseits und gewährleistet andererseits eine ausreichende Festigkeit, Wärmeleitfähigkeit und Wärmebeständigkeit, um den Prozessanforderungen standzuhalten. Beim Pulverbett-Schmelzen ist der zu verarbeitende Werkstoff in Pulverform vorhanden. Ein Laserstrahl erhitzt das Pulver entlang der vorgesehenen Geometrie, wodurch sich das Pulver verflüssigt und stoffschlüssig verbindet. Das Pulverbett-Schmelzen kann beispielsweise als Selective Laser Melting ("SLM") oder als Selektives Lasersintern ("SLS") ausgeformt sein.

In einer Ausführungsform weist der Düsenmund eine Anschrägung auf, durch die ein Teil des Düsenmunds abgeschnitten ist, wobei die Anschrägung im Wesentlichen flächig ausgestaltet ist und in einer Ebene verläuft, die gegenüber der Längsrichtung der Strahldüse geneigt ist. Die Anschrägung kann den Pulverabschnitt und den pulverabschnittfreien Vorschubabschnitt in der Umfangsrichtung um den Lichtkanal abschneiden. Die Anschrägung verringert das Volumen des Düsenmunds gegenüber der Ausführungsform, in der keine Anschrägung vorgesehen ist. So nimmt der Düsenmund einen verringerten Bauraum ein. Die Strahldüse mit der Anschrägung kann beispielsweise herangezogen werden, um eine Bremsscheibe zu beschichten, die eine Aufnahme aufweist, die gegenüber der zu beschichtenden Funktionsfläche axial hervorsteht. Die Anschrägung stellt sicher, dass die Strahldüse flexibel auf der zu beschichtenden Funktionsfläche beweglich ist und nahe an die Aufnahme herangefahren werden kann. Die Anschrägung kann im distalen Bereich nach Art einer Passante an dem Langloch verlaufen. Die Passante definiert die Orientierung der Anschrägung an dem Düsenmund. Die Passante verläuft in der dem Werkstück zugewandten Stirnfläche der Strahldüse entlang einer Gerade oder eines Bogens, die bzw. der das Langloch weder schneidet noch berührt. Der Abstand der Passante von dem Mittelpunkt des Lichtkanals ist größer als der Abstand des entsprechenden Abschnitts des Langlochs von dem Mittelpunkt des Lichtkanals. Der Abstand zwischen der Passante und einer Außenkante des Langlochs ist derart gewählt, dass die dazwischenliegende Wandstärke eine ausreichende Festigkeit und Beanspruchbarkeit der Strahldüse gewährleistet.

In einer Ausführungsform ist die Strahldüse dazu angepasst, den Laserstrahl entlang der Längsrichtung der Strahldüse zu führen, sodass der zumindest eine Laserstrahl orthogonal zur Querschnittsfläche verläuft. Ferner kann der Lichtkanal dazu angepasst sein, an einem radial äußeren Abschnitt ein Schutzgas zur Abschirmung einer Prozesszone zu führen.

Die offenbarungsgemäßen Merkmale tragen teils für sich, teils in Kombination zur Überwindung der eingangs angeführten Unzulänglichkeiten beim Laserauftragschweißen bei.

### Kurze Beschreibung der Figuren

Bevorzugte weitere Ausführungsformen der Erfindung werden durch die nachfolgende Beschreibung der Figuren näher erläutert. Dabei zeigen:
- Figur 1: eine schematische Ansicht einer Strahldüse bei einem Laserauftragschweißen;
- Figur 2: eine Strahldüse in einer Seitenansicht;
- Figur 3: die Strahldüse aus Figur 2 in einer perspektivischen Ansicht;
- Figur 4: die Strahldüse aus Figur 2 verbunden mit weiteren Komponenten;
- Figur 5: die Strahldüse aus Figur 2 in einer Draufsicht auf einen distalen Bereich;
- Figur 6: die Strahldüse aus Figur 2 in einer Draufsicht auf einen Flanschabschnitt;
- Figur 7: eine weitere perspektivische Ansicht der Strahldüse aus Figur 2;
- Figur 8: eine perspektivische Schnittansicht der Strahldüse aus Figur 2;
- Figur 9: die Strahldüse in einer weiteren Ausführungsform in einer Draufsicht auf einen distalen Bereich;
- Figur 10: die Strahldüse mit einer Prozessgaseinheit in einer Draufsicht auf den distalen Bereich;
- Figur 11: eine weitere Ausführungsform der Strahldüse mit einem geometrisch angepassten Düsenmund in einer Seitenansicht; und
- Figur 12: eine weitere Ausführungsform der Strahldüse mit einem geometrisch angepassten Düsenmund in einer Draufsicht.

### Detaillierte Beschreibung bevorzugter Ausführungsbeispiele

Im Folgenden werden bevorzugte Ausführungsbeispiele anhand der Figuren beschrieben. Dabei werden gleiche, ähnliche oder gleichwirkende Elemente in den unterschiedlichen Figuren mit identischen Bezugszeichen versehen, und auf eine wiederholte Beschreibung dieser Elemente wird teilweise verzichtet, um Redundanzen zu vermeiden.

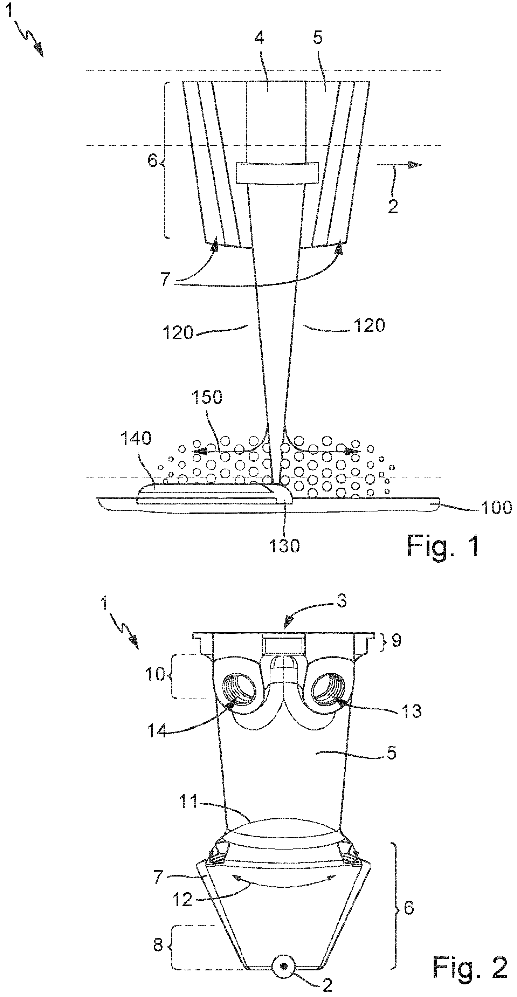

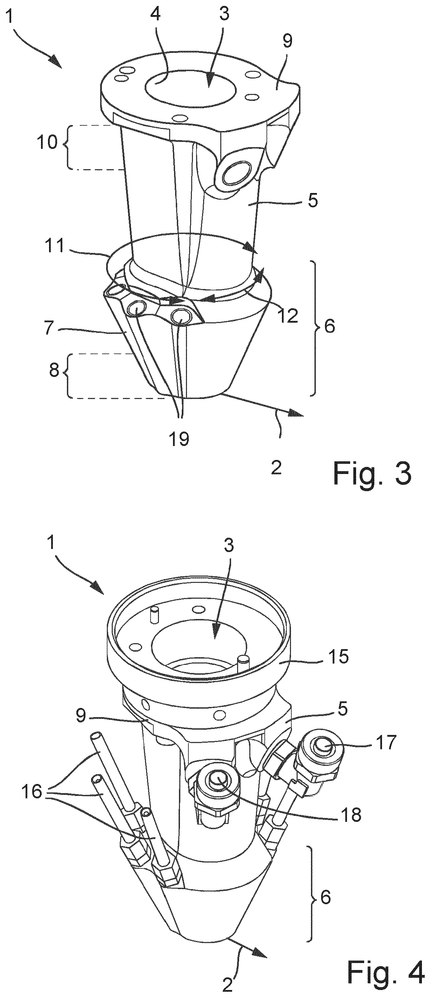

Figur 1 zeigt eine Strahldüse 1 zum Laserauftragschweißen entlang einer Vorschubrichtung 2. Die Vorschubrichtung 2 ist die Richtung, entlang der sich die Strahldüse 1 relativ zu einem Werkstück 100 bewegt. Sie kann aus einer Bewegung, insbesondere einer Rotationsbewegung, des Werkstücks 100, aus einer Bewegung der Strahldüse 1 oder aus einer Überlagerung einer Bewegung des Werkstücks 100 und der Strahldüse 1 resultieren. Die Vorschubrichtung 2 und die korrelierende Vorschubbewegung können über den Prozessverlauf konstant sein. Alternativ können sie mit dem jeweiligen Prozessstadium variieren. Bei dem Werkstück 100 kann es sich um ein rotationssymmetrisches Werkstück, wie eine Bremsscheibe, einen Hydraulikzylinder, eine Druckwalze oder ein Gleitlager handeln. Aus einem Lichtkanal 3 mit einer Mantelfläche 4 tritt zumindest ein Laserstrahl 110 aus. Der Lichtkanal 3 kann zudem dazu angepasst sein, an einem radial äußeren Abschnitt ein Prozessschutzgas 150 zur Abschirmung einer Prozesszone und zur Vermeidung einer Oxidation zu führen. Der Lichtkanal 3 ist von einer Außenstruktur 5 umgeben, die einen Düsenmund 6 aufweist, der wiederum eine Pulvereinheit 7 beinhaltet. Die Pulvereinheit 7 kann beispielsweise eine Mehrzahl an Injektorführungen 19 aufweisen (siehe Figur 3), in die jeweils ein Pulverinjektor 16 (dazu Figur 4) einsetzbar ist. Alternativ zu den einzelnen Injektorführungen 19 kann die Pulvereinheit 7 einen Pulverringspaltkanal aufweisen. Über die Pulvereinheit 7 und die darin angeordneten Pulverinjektoren 16 wird ein pulverförmiger Zusatzwerkstoff 120 auf das Werkstück 100 gerichtet. Der Laserstrahl 110 erwärmt das Werkstück 100 derart, dass sich an einer Werkstoffoberfläche ein Schmelzbad 130 ausbildet. Zudem erwärmt der Laserstrahl 110 den pulverförmigen Zusatzwerkstoff 120, der Hartstoffpartikel und einen Matrixwerkstoff aufweist. Hierfür kann der Laserstrahl 110 eine verringerte Kernintensität aufweisen. Sobald das Schmelzbad 130 abkühlt, bildet sich eine aufgeschweißte Funktionsschicht 140, beispielsweise eine Verschleißschutzschicht, aus den Hartstoffpartikeln und dem Matrixwerkstoff. Die aufgeschweißte Funktionsschicht 140 macht die Werkstoffoberfläche widerstandsfähiger und erhöht deren Belastbarkeit.

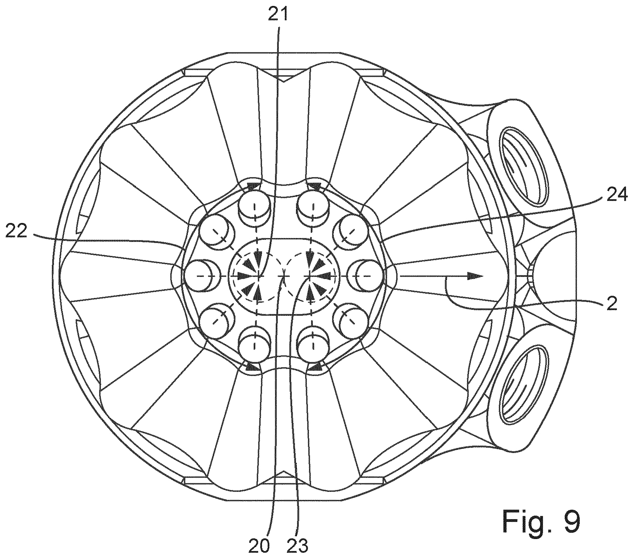

Figur 2 zeigt die Strahldüse 1 in einer Seitenansicht, bei der die Vorschubrichtung 2 aus der Zeichenebene heraus zeigt. Die Strahldüse 1 ist über einen Flanschabschnitt 9 mit weiteren Komponenten eines Lasersystems, wie beispielsweise einer Laseroptik oder einem Prozessadapter, koppelbar. An den Flanschabschnitt 9 schließt sich ein proximaler Bereich 10 an. Ein Kühlmitteleinlass 13 und ein Kühlmittelauslass 14, die ein Teil eines Kühlsystems der Strahldüse 1 sind und die radial von der Strahldüse 1 hervorstehen, können zumindest teilweise in dem proximalen Bereich 10 vorgesehen sein. An dem dem proximalen Bereich 10 gegenüberliegenden Ende der Strahldüse 1 ist ein distaler Bereich 8 ausgeformt. Der distale Bereich ist Bestandteil des trichterförmigen Düsenmunds 6. Dieser weist in einer Umfangsrichtung um den Lichtkanal 3 abschnittsweise einen Pulverabschnitt 11 auf, in dem die Pulvereinheit 7 angeordnet ist. An den Pulverabschnitt 11 schließt sich in der Umfangsrichtung ein pulvereinheitfreier Vorschubabschnitt 12 an. Der Vorschubabschnitt 12 kann als Prozessgasabschnitt 61 (siehe beispielsweise Figur 9) ausgestaltet sein, der Bestandteil einer Prozessgaseinheit 60 ist.

Figur 3 zeigt die Strahldüse aus Figur 2 in einer perspektivischen Ansicht. Der Lichtkanal 3 ist ein hohler Kanal mit der Mantelfläche 4, innerhalb dessen der zumindest eine Laserstrahl 110 verläuft. Die Außenstruktur 5 umgibt den Lichtkanal 3 von dem Flanschabschnitt 9 bis zum distalen Bereich 10. Der Düsenmund 6 ist ein im Wesentlichen trichterförmiger Bereich der Strahldüse 1. Die Trichterform des Düsenmunds 6 dient unter anderem dazu, dass der Düsenmund 6 im Bereich der Pulvereinheit 7 die Mehrzahl an Injektorführungen 19 ausbilden kann. In diese Injektorführungen 19 wird jeweils ein Pulverinjektor 16 (siehe Figur 4) eingesetzt, der den pulverförmigen Zusatzwerkstoff 120 prozessgerecht auf den zumindest einen Laserstrahl 110 und/oder das Werkstück 100 richtet. Die Pulvereinheit 7 erstreckt sich entlang des Pulverabschnitts 11, an den sich in der Umfangsrichtung der pulvereinheitfreie Vorschubabschnitt 12 anschließt. Der Vorschubabschnitt 12 ist der Bereich des Düsenmunds 6, in dem keine Injektorführungen 19 vorgesehen sind, sodass über diesen kein pulverförmiger Zusatzwerkstoff 120 zugeführt wird. In einer Ausführungsform kann der Vorschubabschnitt 12 als Prozessgasabschnitt 61 ausgeformt sein, sodass über diesen ein Prozessgas zugeführt wird. Die Strahldüse 1 kann mittels additiver Fertigungsverfahren, insbesondere mittels Pulverbett-Schmelzen, hergestellt sein. Hierfür kann die Strahldüse 1 aus einer Kupfer-Chrom-Zirkonium-Legierung bestehen. Diese eignet sich für die additive Fertigungsverfahren einerseits und gewährleistet andererseits eine ausreichende Festigkeit, Wärmeleitfähigkeit und Wärmebeständigkeit, um den Prozessanforderungen standzuhalten. Beim Pulverbett-Schmelzen ist der zu verarbeitende Werkstoff in Pulverform vorhanden. Ein Laserstrahl erhitzt das Pulver entlang der vorgesehenen Geometrie, wodurch sich das Pulver verflüssigt und stoffschlüssig verbindet. Das Pulverbett-Schmelzen kann beispielsweise als Selective Laser Melting ("SLM") oder als Selektives Lasersintern ("SLS") ausgeformt sein.

Figur 4 zeigt die Strahldüse 1, an der zusätzliche Komponenten angebracht sind. So ist an den Flanschabschnitt 9 ein Kopplungsring 15 angeschlossen, der die Strahldüse 1 an der angeschlossenen Einheit, beispielsweise der Laseroptik oder dem Prozessadapter, befestigt. In die Injektorführungen 19 der Pulvereinheit 7 sind Pulverinjektoren 16 eingesetzt. Mittels der Pulverinjektoren 16 wird der pulverförmige Zusatzwerkstoff 120 gefördert und mit dem vorgesehenen Fokus auf das Werkstück 100 appliziert. Die einzelnen Pulverinjektoren 16 können zueinander unterschiedliche Pulverfoki anwenden. Alternativ können die Pulverinjektoren 16 auf denselben Fokuspunkt gerichtet sein. Die Pulverinjektoren 16 sind in die dafür vorgesehenen Injektorführungen 19 der Pulvereinheit 7 im Pulverabschnitt 11 angeordnet. Der Vorschubabschnitt 12 ist frei von Pulverinjektoren 16. In den Kühlmitteleinlass 13 ist ferner ein Zulaufstutzen 17 und in den Kühlmittelauslass 14 ein Ablaufstutzen 18 eingesetzt. Diese verbinden den Kühlmitteleinlass 13 und den Kühlmittelauslass 14 mit einem Kühlmittelkreislauf.

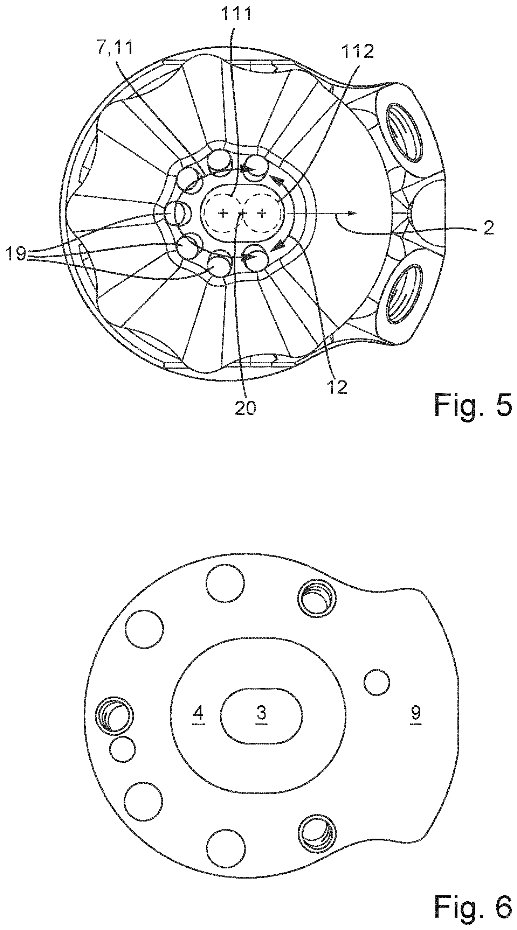

Figur 5 zeigt die Strahldüse 1 in einer Draufsicht auf den distalen Bereich 8. Die orthogonal zur Längsrichtung der Strahldüse 1 verlaufende Querschnittsfläche des Lichtkanals 3 weicht von einer Kreisform ab und ist in der Vorschubrichtung 2 gestreckt. In dem distalen Bereich 8 ist die Querschnittsfläche des Lichtkanals 3 nach Art eines Langlochs ausgestaltet, bei dem sich an zwei gegenüberliegenden Enden eines rechteckigen Abschnitts jeweils ein Teilkreisabschnitt anschließt. Innerhalb des Lichtkanals 3 sind zwei Laserstrahle geführt, ein Primärstrahl 111 und ein Sekundärstrahl 112. Der Primärstrahl 111 und der Sekundärstrahl 112 können auf dasselbe Lichtleitkabel zurückgehen. Ein bereitgestelltes Laserlicht kann über eine Kollimationslinse in ein parallel gerichtetes Strahlbündel aufgeteilt werden. Das Strahlbündel kann beispielsweise durch eine Keilplatte aus einem einzelnen Laserstrahl den Primärstrahl 111 und den Sekundärstrahl 112 formen. Die jeweiligen Mittelpunkte des Primärstrahls 111 und des Sekundärstrahls 112 liegen in der Vorschubrichtung 2 in einer Linie versetzt zu einem Mittelpunkt 20 des Lichtkanals 3.

Vorliegend liegt der Sekundärstrahl 112 in der Vorschubrichtung 2 vor dem Primärstrahl 111 und interagiert nicht mit einer Pulverkaustik. Der Sekundärstrahl 112 kann somit genutzt werden, um das Werkstück 100 vorzuwärmen, bevor der Primärstrahl 111 und der von dem Primärstrahl 111 erwärmte pulverförmige Zusatzwerkstoff 120 auf das Werkstück 100 treffen. Der Sekundärstrahl 112 bewirkt somit eine erste Prozesszone, die zur Vorwärmung des Werkstücks 100 dient und der Primärstrahl 111 bewirkt eine zweite Prozesszone, die zum Aufschweißen des pulverförmigen Zusatzwerkstoffs 120 auf das Werkstück 100 dient. Diese unterschiedlichen Prozesszonen ermöglichen eine fehlerfreie Schweißung, bei der keine Unzulänglichkeiten, insbesondere keine Bindefehler, Poren, Risse und/oder Auflösungen von Karbiden in dem Matrixmaterial, auftreten. Es ist auch möglich, den Sekundärstrahl 112 in der Vorschubrichtung 2 nach dem Primärstrahl 111 zu führen. Somit kann der Sekundärstrahl 112 dafür genutzt werden, das Werkstück 100 nachzuwärmen und somit zu einer gleichmäßigeren Abkühlung beizutragen, die das Auftreten von Einschließungen oder anderen Unzulänglichkeiten unterbindet.

Der Primärstrahl 111 und der Sekundärstrahl 112 sind in unmittelbarer Nähe zueinander angeordnet. Der in der Vorschubrichtung 2 vordere Teilkreisabschnitt des Langlochs ist konzentrisch zum Sekundärstrahl 112, während der hintere Teilkreisabschnitt des Langlochs konzentrisch zum Primärstrahl 111 ist. Ein Flächenmittelpunkt der Querschnittsfläche ist exzentrisch zu einem Mittelpunkt des Primärstrahls 111 und zu einem Mittelpunkt des Sekundärstrahls 112. Es kann ferner ein Tertiärstrahl vorgesehen sein, sodass beispielsweise der Sekundärstrahl in der Vorschubrichtung vor dem Primärstrahl angeordnet ist und der Tertiärstrahl in der Vorschubrichtung nach dem Primärstrahl angeordnet ist. Die einzelnen Laserstrahlen sind zueinander abschirmungsfrei geführt, sodass es genau einen Lichtkanal 3 mit genau einer Mantelfläche 4 gibt, was minimale thermische Verluste bedingt.

Dadurch, dass der Primärstrahl 111 in Figur 5 in der Vorschubrichtung 2 radialversatzfrei hinter dem Sekundärstrahl 112 angeordnet ist und der Sekundärstrahl 112 zur Vorwärmung des Werkstücks dient, ist es wünschenswert, dass der pulverförmige Zusatzwerkstoff nicht mit dem Sekundärstrahl 112 interagiert. Somit wird gewährleistet, dass einerseits der Sekundärstrahl 112 ausschließlich der Funktion der Vorwärmung des Werkstücks nachgehen kann und andererseits der pulverförmige Zusatzwerkstoff nur von dem Primärstrahl 111 und nicht von dem Sekundärstrahl 112 erwärmt wird. Dies wird erreicht, indem die Strahldüse 1 im Bereich des Düsenmunds 6 die Pulvereinheit 7 derart ausgeformt, dass sie in der Umfangsrichtung um den Lichtkanal 3 den Pulverabschnitt 11 bildet, an den sich in der Umfangsrichtung der pulvereinheitfreie Vorschubabschnitt 12 anschließt. Neben der Pulvereinheit 7 kann auch die Prozessgaseinheit 60 ausgeformt sein, die den Prozessgasabschnitt 61 bildet, in welchem Fall der Vorschubabschnitt 12 als Prozessgasabschnitt 61 ausgeformt ist. Der Vorschubabschnitt 12 ist in einem der Vorschubrichtung 2 zugewandten Bereich des Düsenmunds 6 ausgebildet. Der Pulverabschnitt 11 erstreckt sich entlang des Langlochs, das die Querschnittsfläche des Lichtkanals 3 im distalen Bereich 8 ausgeformt. Analog zu einem Kreisbogen erstreckt sich der Pulverabschnitt 11 entlang eines Langlochbogens, insbesondere hufeisenförmig, um den Lichtkanal 3. Der Pulverabschnitt 11 erstreckt sich in der Umfangsrichtung daher um den Lichtkanal 3 um einen Umschlingungswinkel kleiner als 360°, insbesondere zwischen 90° und 330°, weiter insbesondere zwischen 180° und 300°, bezogen auf einen Mittelpunkt des Lichtkanals. Somit wird erreicht, dass der pulverförmige Zusatzwerkstoff, der aus den Injektoren 16, die in den Injektorführungen 19 eingesetzt sind, ausströmt, nur mit dem Primärstrahl 111 interagiert. Der Sekundärstrahl 112 kann somit eine von dem Primärstrahl 111 unabhängige Prozesszone ausbilden. Der Pulverabschnitt 11 und der Vorschubabschnitt 12 bilden in der Draufsicht eine Langlochform. Dies trägt weiter dazu bei, die eingangs identifizierten Unzulänglichkeiten zu verringern oder zu vermeiden.

Figur 6 zeigt die Strahldüse 1 in einer Draufsicht auf den Flanschabschnitt 9. Die orthogonal zur Längsrichtung der Strahldüse 1 verlaufende Querschnittsfläche des Lichtkanals 3 weicht auch im Bereich des Flanschabschnitts 9 von einer Kreisform ab und ist in der Vorschubrichtung 2 gestreckt. Die Streckung der Querschnittsfläche kann von dem distalen Bereich 8 zum Flanschabschnitt 9 abnehmen. Im Bereich des Düsenmunds 6 kann die Querschnittsfläche derart gestreckt sein, dass sie in der Vorschubrichtung zumindest 1,5-fach, insbesondere zumindest doppelt so groß ist wie quer zur Vorschubrichtung. Der Flanschabschnitt 9 weist eine solche radiale Ausdehnung auf, dass die Injektorführungen 19 aus der Draufsicht auf den proximalen Bereich 10 nicht sichtbar sind.

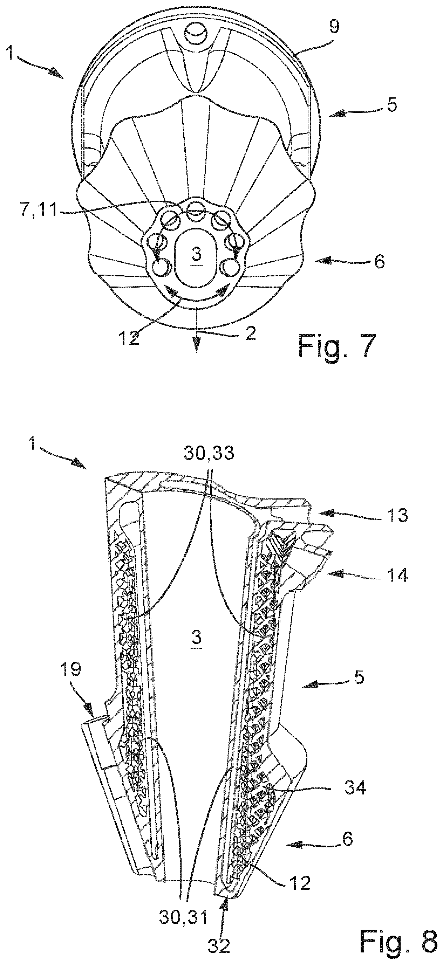

Figur 7 zeigt die Strahldüse 1 in einer weiteren perspektivischen Ansicht. Der Düsenmund 6 weist eine gewölbte Trichterform auf. Innerhalb der einzelnen Wölbungen sind die Injektorführungen 19 ausgeformt, in die die Pulverinjektoren 16 einsetzbar sind. In der Vorschubrichtung 2 ist der Lichtkanal von einer Kreisform abweichend gestreckt, um die offenbarungsgemäßen Vorteile zu erreichen. In der Umfangsrichtung um den Lichtkanal 3 weist der Düsenmund 6 die Pulvereinheit 7 auf. Diese erstreckt sich in der Umfangsrichtung um den Lichtkanal 3 entlang des Pulverabschnitts 11, an den sich der pulverfreie Vorschubabschnitt 12 anschließt.

Figur 8 zeigt eine perspektivische Schnittansicht der Strahldüse 1. Der Lichtkanal 3 hat eine Konusform, sodass die orthogonal zur Längsrichtung der Strahldüse 1 verlaufende Querschnittsfläche des Lichtkanals 3 im distalen Bereich 8 kleiner ist als in dem proximalen Bereich 10. Der Kühlmitteleinlass 13 und der Kühlmittelauslass 14 sind im proximalen Bereich 10 der Strahldüse 1 angeordnet und ragen in radialer Richtung von der Strahldüse 1 hervor. Figur 8 zeigt eine Injektorführungen 19 im Schnitt. Diese ist im Pulverabschnitt 11 angeordnet. Im Vorschubabschnitt 12 ist keine Injektorführung 19 zur Pulverstrahlführung vorgesehen. Die Strahldüse 1 weist ein Kühlsystem 30 auf. Über den Kühlmitteleinlass 13 in dem proximalen Bereich 10 wird einer radial inneren Kühlkammer 31 ein Kühlmedium, beispielsweise Wasser, zurückführt. Das Kühlmedium kann sich in dem proximalen Bereich 10 in der Umfangsrichtung um den Lichtkanal 3 verteilen. Von dem proximalen Bereich 10 verläuft das Kühlmedium zum Düsenmund 6. Die radial innere Kühlkammer 31 ist zumindest in dem Düsenmund 6 ausgebildet. Sie kann von dem distalen Bereich 8 bis zum proximalen Bereich 10 verlaufen und nach Art eines Ringspaltsegments, das sich umlaufend um Lichtkanal 3 erstreckt, ausgestaltet sein. Im Bereich des Düsenmunds 6 erstreckt sich die radial innere Kühlkammer 31 in der Umfangsrichtung umlaufend um den Lichtkanal 3. Die radial innere Kühlkammer 31 hat in der radialen Richtung im Bereich des Düsenmunds 6 eine konstante Breite und ist in einer orthogonal zu einer Längsrichtung der Strahldüse 1 verlaufenden Querschnittsfläche konzentrisch zum Lichtkanal 3.

In dem distalen Bereich 8 ist ein Übergang 32 zwischen der radial inneren Kühlkammer 31 und eine radial äußeren Kühlkammer 33 vorgesehen. Die radial äußere Kühlkammer 33 hat in der radialen Richtung im Bereich des Düsenmunds 6 eine zum distalen Bereich 8 hin abnehmende radiale Breite. Die radial äußere Kühlkammer 33 erstreckt sich von dem distalen Bereich 8 bis zu dem proximalen Bereich 10, wo sie dem Kühlmittelauslass 14 das erwärmte Kühlmittel zuführt. Der Übergang 32 zwischen der radial inneren Kühlkammer 31 und der radial äußeren Kühlkammer 33 ist in dem Vorschubabschnitt 12 angeordnet. Der Vorschubabschnitt 12 weist keine Injektorführungen 19 zur Pulverstrahlführung auf, wodurch genügend Bauraum für den Übergang 32 vorhanden ist.

Die radial äußere Kühlkammer 33 weist eine Kühlstruktur zur Oberflächenvergrößerung auf. Die Kühlstruktur kann mittels eines additiven Fertigungsverfahrens hergestellt sein. Sie gewährleistet, dass das Kühlmedium bei der Rückführung von dem distalen Bereich 8 zum proximalen Bereich 10 mit möglichst viel Oberfläche in Kontakt gerät, um die Wärmeabfuhr zu begünstigen. Die Kühlstruktur ist daraufhin optimiert, möglichst geringe Druckverluste des Kühlmediums hervorzurufen. Dies kann durch eine Wabenstruktur 34, wie sie in Figur 8 gezeigt ist, erreicht werden.

Figur 9 zeigt die Strahldüse 1 einer weiteren Ausführungsform in einer Draufsicht auf den distalen Bereich 8. Die orthogonal zur Längsrichtung der Strahldüse 1 verlaufende Querschnittsfläche des Lichtkanals 3 weicht von einer Kreisform ab und ist in der Vorschubrichtung 2 gestreckt. In dem distalen Bereich 8 ist die Querschnittsfläche des Lichtkanals 3 nach Art eines Langlochs ausgestaltet, bei dem sich an zwei gegenüberliegenden Enden eines rechteckigen Abschnitts jeweils ein Teilkreisabschnitt anschließt. Innerhalb des Lichtkanals 3 sind der Primärstrahl 111 und der Sekundärstrahl 112 geführt. Die jeweiligen Mittelpunkte des Primärstrahls 111 und des Sekundärstrahls 112 liegen in der Vorschubrichtung 2 in einer Linie versetzt zu dem Mittelpunkt 20 des Lichtkanals 3.

Der Primärstrahl 111 hat einen Strahlmittelpunkt, der mit einem ersten Pulverfokus 21 übereinstimmt. Der erste Pulverfokus 21 ist der Punkt, auf den die Injektoren eines ersten Pulverabschnitts 22 fokussiert sind. Der erste Pulverabschnitt 22 bildet eine erste Pulverkaustik. Entsprechend hat der Sekundärstrahl 112 einen Strahlmittelpunkt, der mit einem zweiten Pulverfokus 23 übereinstimmt. Der zweite Pulverfokus 23 ist der Punkt, auf den die Injektoren eines zweiten Pulverabschnitts 24 fokussiert sind. Der zweite Pulverabschnitt 24 bildet eine zweite Pulverkaustik. Der Primärstrahl 111 und der Sekundärstrahl 112 sind zueinander in der Vorschubrichtung 2 versetzt. Entsprechend ist auch der erste Pulverfokus 21 zum zweiten Pulverfokus 23 versetzt. Die Pulvereinheit 7, die den ersten Pulverabschnitt 22 und den zweiten Pulverabschnitt 24 aufweist, kann somit zwei voneinander abweichende Pulverfoki ausbilden. Zudem kann sich ein Pulvermassenstrom, der aus den Injektoren des ersten Pulverabschnitts 22 gefördert wird von einem Pulvermassenstrom, der aus den Injektoren des zweiten Pulverabschnitts 24 gefördert wird, unterscheiden. Zwischen dem ersten Pulverabschnitt 22 und dem zweiten Pulverabschnitt 24 kann eine Lücke vorgesehen sein, sodass der von dem ersten Pulverabschnitt 22 angewendete Pulvermassenstrom ausschließlich mit dem Primärstrahl 111 wechselwirkt und der von dem zweiten Pulverabschnitt 24 angewendete Pulvermassenstrom ausschließlich mit dem Sekundärstrahl 112 wechselwirkt.

Der erste Pulverabschnitt 22 und der zweite Pulverabschnitt 24 tragen zu einer Erhöhung der Auftragsrate bei, indem zumindest zwei Prozesszonen innerhalb der Strahldüse 1 verwirklicht sind. Dies kann eine Spurbreite der aufgetragenen Funktionsschicht erhöhen. Zudem ist eine verbesserte Schutzgasabdeckung bei geringerem Schutzgasverbrauch realisiert, da die Schutzbegasung stärker lokalisiert werden kann.

Der Primärstrahl 111 und der Sekundärstrahl 112 sind in unmittelbarer Nähe zueinander angeordnet. Der in der Vorschubrichtung 2 vordere Teilkreisabschnitt des Langlochs ist konzentrisch zum Sekundärstrahl 112, während der hintere Teilkreisabschnitt des Langlochs konzentrisch zum Primärstrahl 111 ist. Der Mittelpunkt 20 der Querschnittsfläche ist exzentrisch zum Mittelpunkt des Primärstrahls 111 und zum Mittelpunkt des Sekundärstrahls 112.

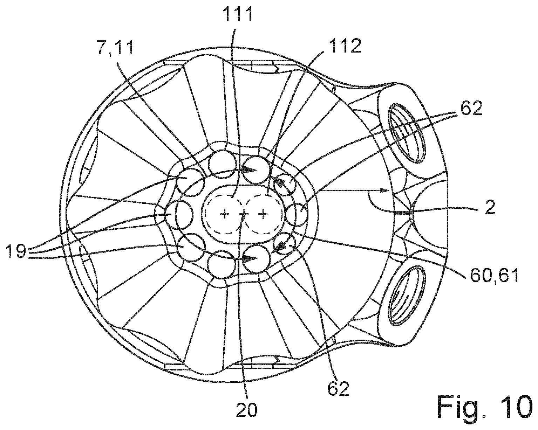

Figur 10 zeigt die Strahldüse 1 in einer Draufsicht auf den distalen Bereich 8. Innerhalb des Lichtkanals 3 sind der Primärstrahl 111 und der Sekundärstrahl 112 geführt. Der Sekundärstrahl 112 ist in der Vorschubrichtung 2 vor dem Primärstrahl 111 und interagiert nicht mit einer Pulverkaustik, wie im Zusammenhang mit Figur 5 näher beschrieben ist. Bei der Wechselwirkung der Laserstrahlen mit der Werkstoffoberfläche und dem Pulverstrahl kann sich zwischen der Strahldüse 1 und dem Werkstück 100 eine Dampffackel ausbilden. Sofern diese nicht eingedämmt wird, kann sie in unerwünschter Weise mit dem zumindest einen Laserstrahl und/oder der unbearbeiteten und/oder der bearbeiteten Werkstoffoberfläche wechselwirken. In dem an den Pulverabschnitt 11 anschließenden Bereich kann daher der Vorschubabschnitt 12 als Prozessgasabschnitt 61 ausgebildet sein. Dieser wird von der radial außerhalb des Lichtkanals 3 angeordneten Prozessgaseinheit 60 gebildet, die das Prozessgas auf das Werkstück ausrichtet. Der Prozessgasabschnitt 61 kann eine unerwünschte Ausbreitung der Dampffackel verhindern und somit zur präzisen Werkstückbearbeitung bei robuster Strahldüsenausgestaltung beitragen. Der Prozessgasabschnitt 61 kann zumindest eine, vorliegend sind es drei, Austrittsöffnung 62 ausbilden. Die Austrittsöffnungen 62 sind an einer Stirnseite der Strahldüse 1 ausgebildet. In die jeweilige Austrittsöffnung 62 kann ein zusätzlicher Injektor zur Zuführung des Prozessgases ohne Zusatzwerkstoff eingesetzt sein. Ein Innendurchmesser der Austrittsöffnung 62 kann geringer sein als ein Innendurchmesser der Injektorführungen 19. Der Prozessgasabschnitt 61 beugt ferner eine Anhaftung von Pulverpartikeln an der Stirnseite der Strahldüse 1 vor. Insofern erhöht der Prozessgasabschnitt 61 auch die Lebensdauer der Strahldüse 1. Der Prozessgasabschnitt 61 und der Pulverabschnitt 11 können umlaufend um das von dem Lichtkanal 3 gebildete Langloch herum vorgesehen sein. Somit sind der Primärstrahl 111 und der Sekundärstrahl 112 vollständig innerhalb der Strahlen, die sich aus dem Pulverstrahl und dem Prozessgasstrahl zusammensetzen.

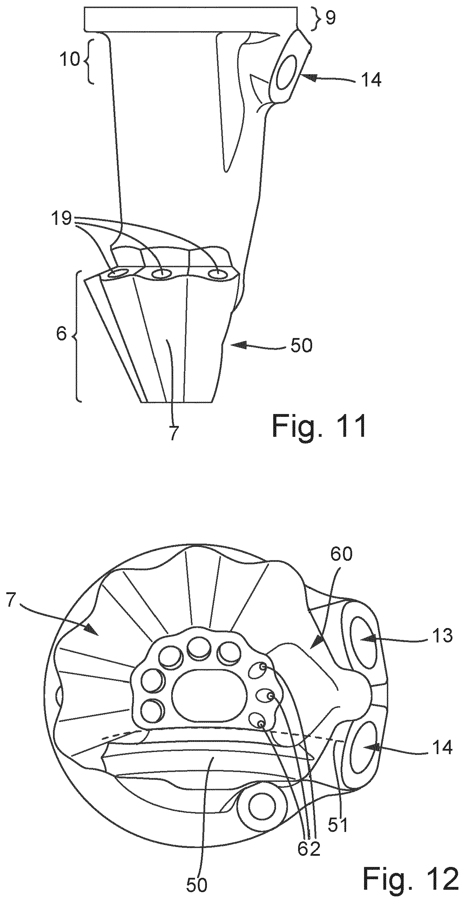

Figur 11 zeigt eine weitere Ausführungsform der Strahldüse 1. Der Düsenmund 6 hat eine Anschrägung 50, durch die ein Teil des Düsenmunds 6 abgeschnitten ist. Die Anschrägung 50 bewirkt, dass der Pulverabschnitt 11 und der pulverabschnittfreie Vorschubabschnitt 12 in der Umfangsrichtung um den Lichtkanal 3 abgeschnitten sind. Die Anschrägung 50 verringert das Volumen des Düsenmunds 6 gegenüber der Ausführungsform, in der keine Anschrägung 50 vorliegt. So ist gewährleistet, dass der Düsenmund 6 einen verringerten Bauraum einnimmt. Die Strahldüse 1 mit der Anschrägung 50 kann beispielsweise herangezogen werden, um eine Bremsscheibe zu beschichten. Die Bremsscheibe kann eine Aufnahme aufweisen, die gegenüber der zu beschichtenden Funktionsfläche axial hervorsteht. Die Anschrägung 50 stellt sicher, dass die Strahldüse 1 flexibel auf der zu beschichtenden Funktionsfläche beweglich ist und nahe an die Aufnahme herangefahren werden kann. Die Anschrägung 50 kann im Wesentlichen flächig ausgestaltet sein und in einer Ebene verlaufen, die gegenüber der Längsrichtung der Strahldüse geneigt ist. Die Anschrägung 50 stellt eine Grenzfläche des Düsenmunds 6 dar, in der keine Pulvereinheit 7 vorgesehen ist. Im distalen Bereich 8 ist die Anschrägung 50 so nahe am Lichtkanal 3 angeordnet, dass an einer dem Werkstück zugewandten Stirnfläche der Strahldüse 1 im Bereich der Anschrägung 50 keine Injektorführungen 19 vorgesehen sind.

Figur 12 zeigt die Strahldüse 1 mit der Anschrägung 50 in einer Draufsicht. Die Anschrägung 50 kann im distalen Bereich 8 nach Art einer Passante 51 an dem Langloch verlaufen. Die Passante 51 definiert die Orientierung der Anschrägung 50 an dem Düsenmund 6. Die Passante 51 verläuft in der dem Werkstück zugewandten Stirnfläche der Strahldüse 1 entlang einer Gerade oder eines Bogens, die bzw. der das Langloch weder schneidet noch berührt. Der Abstand der Passante 51 von dem Mittelpunkt 20 des Lichtkanals 3 ist größer als der Abstand des entsprechenden Abschnitts des Langlochs von dem Mittelpunkt 20 des Lichtkanals 3. Der Abstand zwischen der Passante 51 und einer Außenkante des Langlochs ist derart gewählt, dass die dazwischenliegende Wandstärke eine ausreichende Festigkeit und Beanspruchbarkeit der Strahldüse 1 gewährleistet. Die Orientierung der Passante 51 und somit die Orientierung der Anschrägung 50 an dem Düsenmund 6 kann für verschiedene Strahldüsen 1 abhängig von dem jeweiligen Anwendungsgebiet variiert werden. Beispielsweise kann die Passante 51 in der Vorschubrichtung 2 verlaufen. In diesem Fall verläuft die Passante 51 entlang der Streckung der Querschnittsfläche des Lichtkanals 3. Die Passante 51 verläuft somit entlang der langen Seite des Langlochs. Alternativ kann die Passante 51 beispielsweise quer zur Vorschubrichtung 2 verlaufen. In diesem Fall verläuft die Passante 51 quer zu der Streckung der Querschnittsfläche des Lichtkanals 3. Die Passante 51 verläuft somit entlang der Teilkreisabschnitt des Langlochs. Weiter alternativ kann die Passante 51 beispielsweise in einem Winkel zur Vorschubrichtung 2 verlaufen, der zwischen einem Verlauf entlang der Vorschubrichtung 2 und quer zur Vorschubrichtung 2 liegt. In diesem Fall verläuft die Passante 51 entlang des Übergangsabschnitts zwischen der langen Seite des Langlochs und dem Teilkreisabschnitt des Langlochs. Der Verlauf der Passante 51 gibt die Orientierung der Anschrägung 50 vor. In der Ausführungsform in Figur 12 sind an der Stirnseite der Strahldüse Austrittsöffnungen 62 vorgesehen. Aus diesen tritt das Prozessgas aus der Prozessgaseinheit 60 aus. Vorliegend ist die Anschrägung 50 dergestalt, dass der von ihr abgeschnittene Anteil des Düsenmunds 6 vollständig aus dem Pulverabschnitt 11 stammt, so dass sich der Winkel, entlang dem sich der Pulverabschnitt 11 erstreckt, von der Anschrägung 50 verringert ist, während der Winkel, entlang dem sich die Prozessgaseinheit 60 erstreckt, im Wesentlichen gleich bleibt.

Soweit anwendbar, können alle einzelnen Merkmale, die in den Ausführungsbeispielen dargestellt sind, miteinander kombiniert und/oder ausgetauscht werden, ohne den Bereich der Erfindung zu verlassen wie er in den Ansprüchen definiert wird.

### Bezugszeichenliste

- 1: Strahldüse
- 2: Vorschubrichtung
- 3: Lichtkanal
- 4: Mantelfläche
- 5: Außenstruktur
- 6: Düsenmund
- 7: Pulvereinheit
- 8: distalen Bereich
- 9: Flanschabschnitt
- 10: proximalen Bereich
- 11: Pulverabschnitt
- 12: Vorschubabschnitt
- 13: Kühlmitteleinlass
- 14: Kühlmittelauslass
- 15: Kopplungsring
- 16: Pulverinjektor
- 17: Zulaufstutzen
- 18: Ablaufstutzen
- 19: Injektorführung
- 20: Mittelpunkt des Lichtkanals
- 21: erster Pulverfokus
- 22: erster Pulverabschnitt
- 23: zweite Pulverfokus
- 24: zweiter Pulverabschnitt
- 30: Kühlsystem
- 31: radial innere Kühlkammer
- 32: Übergang
- 33: radial äußere Kühlkammer
- 34: Wabenstruktur
- 50: Anschrägung
- 51: Passante
- 60: Prozessgaseinheit
- 61: Prozessgasabschnitt
- 62: Austrittsöffnung

- 100: Werkstück
- 110: Laserstrahl
- 111: Primärstrahl
- 112: Sekundärstrahl
- 120: pulverförmiger Zusatzwerkstoff
- 130: Schmelzbad
- 140: Funktionsschicht

## Patentansprüche

1. Verfahren zur Verwendung einer Strahldüse (1) zum Laserauftragschweißen entlang einer Vorschubrichtung (2), aufweisend
- einen Lichtkanal (3) zur Führung zumindest eines Laserstrahls, der auf ein Werkstück gerichtet ist; und
- eine radial außerhalb des Lichtkanals (3) angeordnete Pulvereinheit (7) zur Führung zumindest eines Pulverstrahls, der auf das Werkstück aufzutragen ist;
wobei eine orthogonal zu einer Längsrichtung der Strahldüse (1) verlaufende Querschnittsfläche des Lichtkanals (3) von einer Kreisform abweichend in der Vorschubrichtung (2) gestreckt ist.

2. Verfahren nach Anspruch 1, wobei
die Querschnittsfläche an einem von einem Düsenmund (6) gebildeten distalen Bereich (8) der Strahldüse (1) nach Art eines Langlochs ausgestaltet ist, bei dem sich an zwei gegenüberliegenden Enden eines rechteckigen Abschnitts jeweils ein Teilkreisabschnitt anschließt.

3. Verfahren nach einem der vorstehenden Ansprüche, wobei
die Querschnittsfläche, insbesondere im Bereich des Düsenmunds (6), derart gestreckt ist, dass sie in der Vorschubrichtung (2) zumindest 1,5-fach, insbesondere zumindest doppelt so groß ist wie quer zur Vorschubrichtung (2).

4. Verfahren nach einem der vorstehenden Ansprüche, wobei
ein Flächenmittelpunkt der Querschnittsfläche exzentrisch ist zu dem zumindest einen Laserstrahlmittelpunkt des zumindest einen Laserstrahls.

5. Verfahren nach einem der vorstehenden Ansprüche, wobei
der Lichtkanal (3) eine Mehrzahl an Laserstrahlen führt, wobei die Mehrzahl einen ersten Laserstrahl als Primärstrahl (111) und einen zweiten Laserstrahl als Sekundärstrahl (112) hat.

6. Verfahren nach Anspruch 5, wobei
der Sekundärstrahl (112) dazu angepasst ist, weniger mit dem Pulverstrahl zu interagieren als der Primärstrahl (111), wobei der Sekundärstrahl (112) in der Vorschubrichtung (2) vor dem Primärstrahl (111) ist, um das Werkstück vorzuwärmen.

7. Verfahren nach Anspruch 5, wobei
der Sekundärstrahl (112) dazu angepasst ist, weniger mit dem Pulverstrahl zu interagieren als der Primärstrahl (111), wobei der Sekundärstrahl (112) in der Vorschubrichtung (2) hinter dem Primärstrahl (111) ist, um das Werkstück nachzuwärmen.

8. Verfahren nach einem der Ansprüche 5 bis 7, wobei
die Mehrzahl an Laserstrahlen einen dritten Laserstrahl als Tertiärstrahl hat, der dazu angepasst ist, weniger mit dem Pulverstrahl zu interagieren als der Primärstrahl (111), wobei der Primärstrahl (111) in der Vorschubrichtung (2) vor dem Tertiärstrahl ist.

9. Verfahren nach einem der Ansprüche 5 bis 8, wobei
bei der Mehrzahl an Laserstrahlen der Laserstrahl, der in der Vorschubrichtung (2) vorne ist, im Querschnitt konzentrisch zu einem vorderen Teilkreisabschnitt der Querschnittsfläche ist und/oder der Laserstrahl, der in der Vorschubrichtung (2) hinten ist, im Querschnitt konzentrisch zu einem hinteren Teilkreisabschnitt der Querschnittsfläche ist.

10. Verfahren nach einem der Ansprüche 5 bis 9, wobei
bei der Mehrzahl an Laserstrahlen ein Flächenmittelpunkt der Querschnittsfläche deckungsgleich zu einem Flächenmittelpunkt der Mehrzahl an Laserstrahlen ist.

11. Verfahren nach einem der Ansprüche 5 bis 10, die
genau einen Lichtkanal (3) aufweist, sodass die Mehrzahl an Laserstrahlen innerhalb der Strahldüse zueinander abschirmungsfrei geführt ist.

12. Verfahren nach einem der vorstehenden Ansprüche, die
mittels eines additiven Fertigungsverfahrens hergestellt ist und insbesondere aus Kupfer oder einer Kupferlegierung, weiter insbesondere einer Kupfer-Chrom-Zirkonium-Legierung, besteht.

13. Verfahren nach einem der vorstehenden Ansprüche, wobei
der Düsenmund (6) eine Anschrägung (50) aufweist, durch die ein Teil des Düsenmunds (6) abgeschnitten ist, wobei die Anschrägung (50) im Wesentlichen flächig ausgestaltet ist und in einer Ebene verläuft, die gegenüber der Längsrichtung der Strahldüse (1) geneigt ist.

## Claims

1. A method for using a jet nozzle (1) for laser cladding along a direction of advance (2), having
- a light channel (3) for guiding at least one laser beam directed onto a workpiece; and
- a powder unit (7) arranged radially outside the light channel (3) for guiding at least one jet of powder to be applied to the workpiece;
wherein a cross-sectional area of the light channel (3) extending orthogonally to a longitudinal direction of the jet nozzle (1) is elongated in the direction of advance (2) in a manner deviating from a circular shape.

2. The method according to claim 1, wherein
the cross-sectional area at a distal region (8) of the jet nozzle (1) formed by a nozzle mouth (6) is designed in the manner of an elongated hole, in which a partial circular section is attached to each of two opposite ends of a rectangular section.

3. The method according to any one of the preceding claims, wherein
the cross-sectional area, in particular in the region of the nozzle mouth (6), is elongated in such a way that it is at least 1.5 times, in particular at least twice as large in the direction of advance (2) as it is perpendicular to the direction of advance (2).

4. The method according to any one of the preceding claims, wherein
a centre of the cross-sectional area is eccentric relative to the at least one centre of the at least one laser beam.

5. The method according to any one of the preceding claims, wherein
the light channel (3) carries a plurality of laser beams, the plurality of laser beams having a first laser beam as a primary beam (111) and a second laser beam as a secondary beam (112).

6. The method according to claim 5, wherein
the secondary beam (112) is adapted to interact less with the jet of powder than the primary beam (111), the secondary beam (112) being upstream of the primary beam (111) in the direction of advance (2) to preheat the workpiece.

7. The method according to claim 5, wherein
the secondary beam (112) is adapted to interact less with the jet of powder than the primary beam (111), the secondary beam (112) being downstream of the primary beam (111) in the direction of advance (2) to reheat the workpiece.

8. The method according to any one of claims 5 to 7, wherein
the plurality of laser beams have a third laser beam as a tertiary beam, which is adapted to interact less with the jet of powder than the primary beam (111), the primary beam (111) being upstream of the tertiary beam in the direction of advance (2).

9. The method according to any one of claims 5 to 8, wherein
in the plurality of laser beams, the laser beam that is upstream in the direction of advance (2) is concentric in cross-section to a front partial circular section of the cross-sectional area and/or the laser beam that is downstream in the direction of advance (2) is concentric in cross-section to a rear partial circular section of the cross-sectional area.

10. The method according to any one of claims 5 to 9, wherein
for the plurality of laser beams, the centre of the cross-sectional area coincides with the centre of the plurality of laser beams.

11. The method according to any one of claims 5 to 10, which
has exactly one light channel (3), such that the plurality of laser beams within the jet nozzle are guided without being shielded from each other.

12. The method according to any one of the preceding claims, which
is produced using an additive manufacturing process and consists in particular of copper or a copper alloy, and more particularly of a copper-chromium-zirconium alloy.

13. The method according to any one of the preceding claims, wherein
the nozzle mouth (6) has a chamfer (50) by which part of the nozzle mouth (6) is cut off, the chamfer (50) being essentially planar and running in a plane that is inclined relative to the longitudinal direction of the jet nozzle (1).

## Revendications

1. Procédé d'utilisation d'une buse à jet (1) pour le rechargement par dépôt laser le long d'une direction d'avancement (2), comprenant
- un conduit de lumière (3) pour guider au moins un faisceau laser qui est dirigé vers une pièce ; et
- une unité à poudre (7) disposée radialement à l'extérieur du conduit de lumière (3) pour guider au moins un jet de poudre qui doit être appliqué à la pièce ;
dans lequel une surface de section transversale du conduit de lumière (3) s'étendant orthogonalement à une direction longitudinale de la buse à jet (1) et de forme non circulaire est étirée dans la direction d'avancement (2).

2. Procédé selon la revendication 1, dans lequel
la surface de section transversale dans une zone (8) distale de la buse à jet (1) formée par une embouchure de buse (6) est conçue sous la forme d'un trou oblong, selon lequel respectivement une section circulaire partielle s'attache aux deux extrémités opposées d'une section rectangulaire.

3. Procédé selon l'une quelconque des revendications précédentes, dans lequel
la surface de section transversale, en particulier dans la zone de l'embouchure de buse (6), est étirée de manière à être au moins 1,5 fois, en particulier au moins deux fois supérieure dans la direction d'avancement (2) que perpendiculairement à la direction d'avancement (2).

4. Procédé selon l'une quelconque des revendications précédentes, dans lequel
un point central de surface de la surface de section transversale est excentré par rapport au point central de faisceau laser de l'au moins un faisceau laser.

5. Procédé selon l'une quelconque des revendications précédentes, dans lequel
le conduit de lumière (3) guide une pluralité de faisceaux laser, dans lequel la pluralité comporte un premier faisceau laser en tant que faisceau primaire (111) et un deuxième faisceau laser en tant que faisceau secondaire (112).

6. Procédé selon la revendication 5, dans lequel
le faisceau secondaire (112) est conçu pour interagir moins avec le jet de poudre que le faisceau primaire (111), le faisceau secondaire (112) étant en amont du faisceau primaire (111) dans la direction d'avancement (2) pour préchauffer la pièce.

7. Procédé selon la revendication 5, dans lequel
le faisceau secondaire (112) est conçu pour interagir moins avec le jet de poudre que le faisceau primaire (111), le faisceau secondaire (112) étant en aval du faisceau primaire (111) dans la direction d'avancement (2) pour réchauffer la pièce.

8. Procédé selon l'une quelconque des revendications 5 à 7, dans lequel
la pluralité de faisceaux laser comporte un troisième faisceau laser en tant que faisceau tertiaire, lequel est conçu pour interagir moins avec le jet de poudre que le faisceau primaire (111), le faisceau primaire (111) étant en amont du faisceau tertiaire dans la direction d'avancement (2).

9. Procédé selon l'une quelconque des revendications 5 à 8, dans lequel
dans la pluralité des faisceaux laser, le faisceau laser qui est en amont dans la direction d'avancement (2) est, en coupe transversale, concentrique par rapport à une section circulaire partielle avant de la surface de section transversale et/ou le faisceau laser, qui est en aval dans la direction d'avancement (2), est, en coupe transversale, concentrique par rapport à une section circulaire partielle arrière de la surface de section transversale.

10. Procédé selon l'une quelconque des revendications 5 à 9, dans lequel
dans la pluralité de faisceaux laser, le point central de surface de la surface de section transversale est identique au point central de surface de la pluralité de faisceaux laser.

11. Procédé selon l'une quelconque des revendications 5 à 10, lequel
comporte exactement un conduit de lumière (3) de telle sorte que la pluralité de faisceaux laser à l'intérieur de la buse à jet soient guidés sans blindage les uns par rapport aux autres.

12. Procédé selon l'une quelconque des revendications précédentes, lequel
est mis en œuvre au moyen d'un procédé de fabrication additive et lequel comprend en particulier du cuivre ou un alliage de cuivre, et plus particulièrement un alliage de cuivre-chrome-zirconium.

13. Procédé selon l'une quelconque des revendications précédentes, dans lequel l'embouchure de buse (6) comporte un chanfrein (50) au moyen duquel une partie de l'embouchure de buse (6) est coupée, le chanfrein (50) étant essentiellement plan et s'étendant dans un plan qui est incliné par rapport à la direction longitudinale de la buse à jet (1).
